# EUROPEAN PATENT APPLICATION

(11) **EP 4 778 405 A1**
(43) Date of publication of application: **22.07.2026**
(21) Application number: 24865580.5
(22) Date of filing: 13.09.2024
(51) Int. Cl.: A23L 33/135, A23L 2/52, A23L 33/125

(54) **COMPOSITION FOR IMPROVING TOTAL ATTENTIVENESS, COGNITIVE FLEXIBILITY, AND/OR EXECUTION FUNCTION**

(30) Priority: 14.09.2023 JP 2023149636
(71) Applicant: Ezaki Glico Co., Ltd., Osaka-shi Osaka 555-8502 (JP)
(72) Inventor: AZUMA, Naoki, Osaka-shi, Osaka 555-8502 (JP); SAITO, Yasuo, Osaka-shi, Osaka 555-8502 (JP); MAWATARI, Takashi, Osaka-shi, Osaka 555-8502 (JP)
(74) Representative: Hoffmann Eitle
(86) International application number: PCT/JP2024/032990
(87) International publication number: WO 2025/058081

(57) **Abstract**

A problem to be solved by the present invention is to provide a novel means for improving complex attention, cognitive flexibility, and/or executive function. Provided is a composition for improving at least one selected from the group consisting of complex attention, cognitive flexibility, and executive function, the composition comprising bifidobacteria and water-soluble dietary fiber.

## Description

### Technical Field

The present invention relates to a composition for improving complex attention, cognitive flexibility, and/or executive function.

### Background Art

Dementia is a disease associated with aging and refers to a condition in which cognitive functions, such as memory and judgment, are impaired due to the death or decline in function of brain cells, leading to problems in terms of social life and interpersonal relationships. It is estimated that approximately 15% of the elderly aged 65 years or older suffer from dementia, and that approximately 4 million people have mild cognitive impairment (MCI), which is a pre-dementia condition.

Dementia and MCI present with various subtypes, including cases where functions related to memory decline and cases where functions related to reaction time decline. There are also various types of memory. Specifically, Cognitrax has been developed and is used as a tool for measuring these memory and cognitive functions. More specifically, Cognitrax measures the following items and determines which domain of function is declining:
Overall memory, verbal memory, visual memory, cognitive function speed, reaction time, complex attention, sustained attention, simple attention, cognitive flexibility, processing speed, motor speed, executive function, social cognition, logical reasoning, working memory, and neurocognitive index.
Of these functions, complex attention, cognitive flexibility, and executive function are extremely important because they affect various judgments in social life. Under these circumstances, there is a strong demand for the development of a novel means for improving complex attention, cognitive flexibility, and executive function.

### Citation List

### Non-patent Literature

NPL 1: Jpn Pharmacol Ther. Vol. 48, No. 4, 2020, 685-679
NPL 2: Jpn Pharmacol Ther. Vol. 47, No. 5, 2019, 739-749
NPL 3: Jpn Pharmacol Ther. Vol. 48, No. 3, 2020, 475-486
NPL 4: J Biosci Bioeng. 2012; 113: 587-91
NPL 5: Biosci Microbiota Food Health. 2016; 35(4): 163-171
NPL 6: Arch Clin Neuropsychol. 2006, 7, 623-643
NPL 7: Molecules. 2020, 18, 4265
NPL 8: Psychiatry Clin Neurosci. 2007, 1, 112-119
NPL 9: PLoS One. 2014, 4, e95192
NPL 10: Microbiome. 2021, 1, 95
NPL 11: Nutrients. 2019, 4, 839

### Summary of Invention

### Technical Problem

A problem to be solved by the present invention is to provide a novel means for improving complex attention, cognitive flexibility, and/or executive function.

### Solution to Problem

Under the circumstances described above, the present inventors conducted extensive research and found that a combination of bifidobacteria and water-soluble dietary fiber can improve complex attention, cognitive flexibility, and/or executive function. More specifically, the present inventors found that a combination of bifidobacteria and water-soluble dietary fiber improves overall cognitive ability (average score of memory, information processing speed, reaction time, attention, and judgment) and improves, in particular, attention (the ability to maintain attention and respond accurately), judgment (the accuracy and speed of judgment, the ability to respond to changes in instructions and process them), and/or executive ability (the ability to understand rules and concepts, and make decisions). The present invention is based on such novel findings. In particular, the present inventors found that the intake of the composition of the present invention can improve complex attention, cognitive flexibility, and/or executive function even in healthy middle-aged and elderly individuals. Therefore, the present invention provides the following items:
Item 1.
   A composition for improving at least one selected from the group consisting of complex attention, cognitive flexibility, and executive function, the composition comprising bifidobacteria and water-soluble dietary fiber.
Item 2.
   The composition according to Item 1, wherein the water-soluble dietary fiber comprises inulin.
Item 3.
   The composition according to Item 1 or 2, for improving a neurocognitive index.
Item 4.
   The composition according to any one of Items 1 to 3, wherein the bifidobacteria have an ability to proliferate in the gut.
Item 5.
   The composition according to any one of Items 1 to 4, wherein the bifidobacteria have an anti-metabolic syndrome effect.
Item 6.
   The composition according to any one of Items 1 to 5, which is a food product.
Item 7.
   The composition according to any one of Items 1 to 6, which is a food product for suppressing cognitive decline, maintaining cognitive function, or improving cognitive function.
Item 8.
   Use of bifidobacteria and water-soluble dietary fiber for the manufacture of a composition for improving at least one selected from the group consisting of complex attention, cognitive flexibility, and executive function.
Item 9.
   The use according to Item 8, wherein the water-soluble dietary fiber comprises inulin.
Item 10.
   The use according to Item 8 or 9, wherein the composition is for improving a neurocognitive index.
Item 11.
   The use according to any one of Items 8 to 10, wherein the bifidobacteria have an ability to proliferate in the gut.
Item 12.
   The use according to any one of Items 8 to 11, wherein the bifidobacteria have an anti-metabolic syndrome effect.
Item 13.
   The use according to any one of Items 8 to 12, wherein the composition is a food product.
Item 14.
   The use according to Item 13, wherein the composition is a food product for suppressing cognitive decline, maintaining cognitive function, or improving cognitive function.
Item 15.
   Use of water-soluble dietary fiber for the manufacture of a composition for improving at least one selected from the group consisting of complex attention, cognitive flexibility, and executive function, the composition comprising bifidobacteria.
Item 16.
   The use according to Item 15, wherein the water-soluble dietary fiber comprises inulin.
Item 17.
   The use according to Item 15 or 16, wherein the composition is for improving a neurocognitive index.
Item 18.
   The use according to any one of Items 15 to 17, wherein the bifidobacteria have an ability to proliferate in the gut.
Item 19.
   The use according to any one of Items 15 to 18, wherein the bifidobacteria have an anti-metabolic syndrome effect.
Item 20.
   The use according to any one of Items 15 to 19, wherein the composition is a food product.
Item 21.
   The use according to Item 20, wherein the composition is a food product for suppressing cognitive decline, maintaining cognitive function, or improving cognitive function.
Item 22.
   Use of bifidobacteria for the manufacture of a composition for improving at least one selected from the group consisting of complex attention, cognitive flexibility, and executive function, the composition comprising water-soluble dietary fiber.
Item 23.
   The use according to Item 22, wherein the water-soluble dietary fiber comprises inulin.
Item 24.
   The use according to Item 22 or 23, wherein the composition is for improving a neurocognitive index.
Item 25.
   The use according to any one of Items 22 to 24, wherein the bifidobacteria have an ability to proliferate in the gut.
Item 26.
   The use according to any one of Items 22 to 25, wherein the bifidobacteria have an anti-metabolic syndrome effect.
Item 27.
   The use according to any one of Items 22 to 26, wherein the composition is a food product.
Item 28.
   The use according to Item 27, wherein the composition is a food product for suppressing cognitive decline, maintaining cognitive function, or improving cognitive function.
Item 29.
   A method of improving at least one selected from the group consisting of complex attention, cognitive flexibility, and executive function,
   the method comprising:
   administering an effective amount of bifidobacteria and water-soluble dietary fiber to a subject in need thereof.
Item 30.
   The method according to Item 29, wherein the water-soluble dietary fiber comprises inulin.
Item 31.
   The method according to Item 29 or 30, for improving a neurocognitive index.
Item 32.
   The method according to any one of Items 29 to 31, wherein the bifidobacteria have an ability to proliferate in the gut.
Item 33.
   The method according to any one of Items 29 to 32, wherein the bifidobacteria have an anti-metabolic syndrome effect.
Item 34.
   The method according to any one of Items 29 to 33, wherein the bifidobacteria and the water-soluble dietary fiber are ingested in the form of a food product.
Item 35.
   The method according to any one of Items 29 to 34, for suppressing cognitive decline, maintaining cognitive function, or improving cognitive function, wherein the bifidobacteria and the water-soluble dietary fiber are ingested in the form of a food product.
Item 36.
   A combination of bifidobacteria and water-soluble dietary fiber for use in improving at least one selected from the group consisting of complex attention, cognitive flexibility, and executive function.
Item 37.
   The combination for use according to Item 36, wherein the water-soluble dietary fiber comprises inulin.
Item 38.
   The combination for use according to Item 36 or 37, which is for use in improving a neurocognitive index.
Item 39.
   The combination for use according to any one of Items 36 to 38, wherein the bifidobacteria have an ability to proliferate in the gut.
Item 40.
   The combination for use according to any one of Items 36 to 39, wherein the bifidobacteria have an anti-metabolic syndrome effect.
Item 41.
   The combination for use according to any one of Items 36 to 40, which is a food product.
Item 42.
   The combination for use according to any one of Items 36 to 41, which is a food product for use in suppressing cognitive decline, maintaining cognitive function, or improving cognitive function.
Item 43.
   Water-soluble dietary fiber for use in combination with bifidobacteria in improving at least one selected from the group consisting of complex attention, cognitive flexibility, and executive function.
Item 44.
   The water-soluble dietary fiber for use according to Item 43, which comprises inulin.
Item 45.
   The water-soluble dietary fiber for use according to Item 43 or 44, for use in combination with bifidobacteria in improving a neurocognitive index.
Item 46.
   The water-soluble dietary fiber for use according to any one of Items 43 to 45, wherein the bifidobacteria have an ability to proliferate in the gut.
Item 47.
   The water-soluble dietary fiber for use according to any one of Items 43 to 46, wherein the bifidobacteria have an anti-metabolic syndrome effect.
Item 48.
   The water-soluble dietary fiber for use according to any one of Items 43 to 47, which is in the form of a food product.
Item 49.
   The water-soluble dietary fiber for use according to any one of Items 43 to 48, which is in the form of a food product for use in combination with bifidobacteria in suppressing cognitive decline, maintaining cognitive function, or improving cognitive function.
Item 50.
   Bifidobacteria for use in combination with water-soluble dietary fiber in improving at least one selected from the group consisting of complex attention, cognitive flexibility, and executive function.
Item 51.
   The bifidobacteria for use according to Item 50, wherein the water-soluble dietary fiber comprises inulin.
Item 52.
   The bifidobacteria for use according to Item 50 or 51, for use in combination with water-soluble dietary fiber in improving a neurocognitive index.
Item 53.
   The bifidobacteria for use according to any one of Items 50 to 52, which have an ability to proliferate in the gut.
Item 54.
   The bifidobacteria for use according to any one of Items 50 to 53, which have an anti-metabolic syndrome effect.
Item 55.
   The bifidobacteria for use according to any one of Items 50 to 54, which are in the form of a food product.
Item 56.
   The bifidobacteria for use according to any one of Items 50 to 55, which are in the form of a food product for use in combination with water-soluble dietary fiber in suppressing cognitive decline, maintaining cognitive function, or improving cognitive function.

### Advantageous Effects of Invention

The present invention can provide a novel means for improving complex attention, cognitive flexibility, and/or executive function. Each of the items measured by Cognitrax are generally independent of the others; even if a substance has an effect of improving some of these items, it does not necessarily have an effect of improving other items. Specifically, ergothioneine is known to be effective for cognitive function speed, but not for complex attention, cognitive flexibility, or executive function (NPL 1, Table 2 and Table 3; between-group comparison). Plasmalogen is known to be effective only for verbal memory, and not for complex attention, cognitive flexibility, or executive function (NPL 2, Table 5; between-group comparison). Additionally, GABA is known to be effective only for motor speed, and not for complex attention, cognitive flexibility, or executive function (NPL 3, Table 1; between-group comparison). There have been no reports so far about the effect of improving complex attention, cognitive flexibility, and executive function by combining bifidobacteria with water-soluble dietary fiber; therefore, the effects of the present invention cannot be predicted from the prior art.

### Brief Description of Drawings

Fig. 1 shows a flowchart of the process from subject enrollment to analysis in the Examples.
Fig. 2 shows the quantitative results of fecal bifidobacteria in the Examples.

### Description of Embodiments

### Composition for Improving Complex Attention, Cognitive Flexibility, and/or Executive Function

The present invention provides a composition for improving at least one selected from the group consisting of complex attention, cognitive flexibility, and executive function, the composition comprising bifidobacteria and water-soluble dietary fiber. In the present invention, examples of the types of bifidobacteria include, but are not particularly limited to, *Bifidobacterium animalis, Bifidobacterium adolescentis, Bifidobacterium bifidum, Bifidobacterium breve, Bifidobacterium catenulatum, Bifidobacterium longum,* and *Bifidobacterium pseudocatenulatum,* with *Bifidobacterium animalis* being preferred. Among *Bifidobacterium animalis, Bifidobacterium animalis* subsp. *lactis* is preferred. The bifidobacteria are preferably those that have an ability to proliferate in the gut. More specifically, the bifidobacteria are preferably those capable of increasing the total number of bifidobacteria in the gut. Whether or not they have the ability to proliferate in the gut can be determined, for example, by measuring the number of bifidobacteria in a fecal sample using real-time PCR. More specifically, the measurement and evaluation can be performed according to the method described in NPL 4. In the present invention, if the proliferation in the gut is confirmed by the above method, the bifidobacteria can be selected as preferable bifidobacteria of the present invention. It is preferable that the bacteria can proliferate so that the number of bifidobacteria becomes two-fold or more, preferably five-fold or more, and more preferably ten-fold or more compared with the number of bacteria ingested into the body when measured by the above method. Furthermore, in the present invention, the bifidobacteria are preferably those that have an anti-metabolic syndrome effect. The anti-metabolic syndrome effect can be confirmed, for example, by measuring visceral fat area. More specifically, the measurement and evaluation can be performed according to the method described in NPL 5. In the present invention, if a reduction in visceral fat area is confirmed by the above method, the bifidobacteria can be selected as preferable bifidobacteria of the present invention. The bifidobacteria are preferably those that reduce visceral fat area to 0.98 times or less, and more preferably 0.96 times or less when measured by the above method. In a preferable embodiment of the present invention, examples of bifidobacteria include GCL2505 belonging to *Bifidobacterium animalis* subsp. *lactis.* The GCL2505 strain is deposited under the accession number FERM ABP-21918. The strain was deposited on February 17, 2010, with the Patent Microorganisms Depositary, National Institute of Technology and Evaluation (NITE) (Room No. 120, 2-5-8 Kazusakamatari, Kisarazushi, Chiba Prefecture, Japan, 292-0818) under the Budapest Treaty.

The number of bifidobacteria in the composition of the present invention is not limited and can be appropriately set within the range of, for example, 10 million/g, preferably 30 million/g, more preferably 50 million/g, even more preferably 80 million/g or more, and particularly preferably 100 million/g or more. The upper limit is not particularly limited, and is, for example, 10 trillion/g or less, 100 billion/g or less, or 10 billion/g or less. In a typical embodiment of the present invention, live bifidobacteria are used.

Examples of the water-soluble dietary fiber include inulin, indigestible dextrin, water-soluble soybean polysaccharides, polydextrose, sodium alginate, psyllium, fucoidan, laminaran, sodium carboxymethyl cellulose, pullulan, curdlan, and low-molecular-weight hemicellulose, with inulin being preferred. These water-soluble dietary fibers may be used singly or in a combination of multiple types.

The content of the water-soluble dietary fiber in the composition of the present invention is not limited and can be set within the range of, for example, 0.5 to 10 wt%, preferably 1 to 5 wt%, and more preferably 1.5 to 3 wt%, based on the total mass of the composition.

In the present invention, a combination of bifidobacteria and water-soluble dietary fiber, which are active ingredients of the present invention, may be used in the form of a composition for improving at least one selected from the group consisting of complex attention, cognitive flexibility, and executive function. Alternatively, the combination may be used in the form of a composition in combination with various carriers that are pharmaceutically acceptable or that can be added to food (e.g., isotonic agents, chelating agents, stabilizers, pH adjusters, preservatives, antioxidants, solubilizing agents, thickeners, excipients, and binders). In an embodiment in which various carriers are contained, the total content of the bifidobacteria and the water-soluble dietary fiber in the composition is not limited, and can be appropriately set within the range of, for example, 50 mass% or more, 60 mass% or more, 70 mass% or more, 80 mass% or more, 90 mass% or more, 95 mass% or more, 99 mass% or more, and the like.

Examples of isotonic agents include sugars, such as glucose, trehalose, lactose, fructose, mannitol, xylitol, and sorbitol; polyhydric alcohols, such as glycerin, polyethylene glycol, and propylene glycol; and inorganic salts, such as sodium chloride, potassium chloride, and calcium chloride. These isotonic agents can be used singly or in a combination of two or more.

Examples of chelating agents include edetates, such as disodium edetate, calcium disodium edetate, trisodium edetate, tetrasodium edetate, and calcium edetate, as well as ethylenediaminetetraacetate, nitrilotriacetic acid or its salt, sodium hexametaphosphate, and citric acid. These chelating agents can be used singly or in a combination of two or more.

Examples of stabilizers include sodium bisulfite.

Examples of pH adjusters include acids, such as hydrochloric acid, carbonic acid, acetic acid, and citric acid, alkali metal hydroxides, such as sodium hydroxide and potassium hydroxide, alkali metal carbonates or hydrogencarbonate, such as sodium carbonate, alkali metal acetates, such as sodium acetate, alkali metal citrates, such as sodium citrate, and bases, such as trometamol. These pH adjusters can be used singly or in a combination of two or more.

Examples of preservatives include sorbic acid, potassium sorbate, p-hydroxybenzoates, such as methyl p-hydroxybenzoate, ethyl p-hydroxybenzoate, propyl p-hydroxybenzoate, and butyl p-hydroxybenzoate, quaternary ammonium salts, such as chlorhexidine gluconate, benzalkonium chloride, benzethonium chloride, and cetylpyridinium chloride, alkyl polyaminoethyl glycine, chlorobutanol, polyquaternium, polyhexamethylene biguanide, and chlorhexidine. These preservatives can be used singly or in a combination of two or more.

Examples of antioxidants include sodium bisulfite, dried sodium sulfite, sodium pyrosulfite, and mixed tocopherol concentrate. These antioxidants can be used singly or in a combination of two or more.

Examples of solubilizing agents include sodium benzoate, glycerin, D-sorbitol, glucose, propylene glycol, hydroxypropyl methylcellulose, polyvinylpyrrolidone, macrogol, and D-mannitol. These solubilizing agents can be used singly or in a combination of two or more.

Examples of thickeners include polyethylene glycol, methyl cellulose, ethyl cellulose, carmellose sodium, xanthan gum, sodium chondroitin sulfate, hydroxyethyl cellulose, hydroxypropyl cellulose, hydroxypropyl methylcellulose, polyvinylpyrrolidone, and polyvinyl alcohol. These thickeners can be used singly or in a combination of two or more.

Examples of excipients include lactose, corn starch, L-cysteine, trehalose, maltitol, and sorbitol. These excipients can be used singly or in a combination of two or more.

Examples of binders include crystalline cellulose, starch, sucrose, hydroxypropyl cellulose, gelatin, powdered gum arabic, polyvinylpyrrolidone, pullulan, dextrin, cyclodextrin, methyl cellulose, ethyl cellulose, hydroxymethyl cellulose, hydroxypropyl cellulose, hydroxypropyl methyl cellulose, polyvinyl alcohol, and polyethylene glycol. These binders can be used singly or in a combination of two or more.

The intake amount of the composition of the present invention is not limited, and the daily intake of the bifidobacteria as the active ingredient can be appropriately set within the range of, for example, 10 million to 10 trillion, preferably 100 million to 1 trillion, more preferably 1 billion to 100 billion, even more preferably 5 billion to 30 billion, and particularly preferably 10 billion to 20 billion bifidobacteria. While the intake amount of the composition of the present invention based on the weight of bifidobacteria is also not limited, the daily intake of bifidobacteria as the active ingredient can be appropriately set within the range of, for example, 1 mg to 10 g, preferably 10 mg to 1000 mg, more preferably 40 mg to 300 mg, and even more preferably 200 mg or more.

In addition to the bifidobacteria described above, the composition of the present invention may further comprise substances known to improve complex attention, cognitive flexibility, and/or executive function. Examples of substances known to improve complex attention, cognitive flexibility, and/or executive function include propolis and chlorogenic acids. These substances can be used singly or in a combination of two or more. The composition of the present invention may further comprise substances known to improve functions other than complex attention, cognitive flexibility, and executive function, i.e., substances known to improve overall memory, verbal memory, visual memory, cognitive function speed, reaction time, sustained attention, simple attention, processing speed, motor speed, social cognition, logical reasoning, working memory, neurocognitive index, and the like. Examples of substances known to improve such functions include GABA, Palatinose, plasmalogen, and ergothioneine. These substances can be used singly or in a combination of two or more.

The composition of the present invention is preferably an oral composition. The oral composition includes food or drink compositions and pharmaceutical compositions. In the present invention, the food or drink compositions include healthfunctional foods (foods with nutrient function claims, foods for specified health uses, and foods with function claims).

Examples of food or drink compositions include beverages, such as vegetable juice beverages, fruit juice beverages, mixed vegetable and fruit juice beverages, fermented milk beverages, and almond-containing beverages; and foods, such as ice cream, sherbets, candies, gummies, almond-containing foods, biscuits (e.g., cream sandwich biscuits), chocolate (including quasi-chocolate), and fermented dairy products (yogurt and cheese). The ice cream is preferably lacto-ice cream (such as lacto-ice cream containing fermented milk). The quasi-chocolate includes corn-containing quasi-chocolate. The dairy products include fermented milk, ice cream, and milk beverages. The food or drink composition of the present invention also includes supplements and the like.

In another embodiment, the present invention provides use of bifidobacteria and water-soluble dietary fiber for the manufacture of a composition for improving at least one selected from the group consisting of complex attention, cognitive flexibility, and executive function; use of water-soluble dietary fiber for the manufacture of a composition for improving at least one selected from the group consisting of complex attention, cognitive flexibility, and executive function, the composition comprising bifidobacteria; use of bifidobacteria for the manufacture of a composition for improving at least one selected from the group consisting of complex attention, cognitive flexibility, and executive function, the composition comprising water-soluble dietary fiber; a method of improving at least one selected from the group consisting of complex attention, cognitive flexibility, and executive function, the method comprising administering (ingesting) an effective amount of bifidobacteria and water-soluble dietary fiber to a subject in need thereof; a combination of bifidobacteria and water-soluble dietary fiber for use in improving at least one selected from the group consisting of complex attention, cognitive flexibility, and executive function; water-soluble dietary fiber for use in combination with bifidobacteria in improving at least one selected from the group consisting of complex attention, cognitive flexibility, and executive function; and bifidobacteria for use in combination with water-soluble dietary fiber in improving at least one selected from the group consisting of complex attention, cognitive flexibility, and executive function. In these embodiments, the details (types, amounts, etc.) regarding the bifidobacteria, the water-soluble dietary fiber, and optional other ingredients, the method of use (pharmaceutical products, food and beverages, etc.), and the purpose of use (improvement of at least one selected from the group consisting of complex attention, cognitive flexibility, and executive function, etc.) are the same as those described above. In the present invention, examples of subjects suitable for administration (or ingestion) of the bifidobacteria and water-soluble dietary fiber include mammals, such as humans, mice, rats, and guinea pigs (preferably humans). In the case of human subjects, examples include, but are not particularly limited to, humans who do not suffer from dementia, mild cognitive impairment, or the like. While the age of the subjects is also not particularly limited, examples include age groups in which complex attention, cognitive flexibility, executive function, and the like are generally considered to decline with aging. In a preferable embodiment, the present invention can improve such complex attention, cognitive flexibility, and/or executive function.

According to the present invention, use of a combination of bifidobacteria and water-soluble dietary fiber can improve at least one (preferably two, more preferably three) selected from the group consisting of complex attention, cognitive flexibility, and executive function. According to the present invention, judgment can be improved by improving these functions (particularly cognitive flexibility etc.). Complex attention and executive function can also be referred to as "attention" and "executive ability," respectively. Therefore, in one embodiment, the present invention provides a composition for improving at least one selected from the group consisting of attention, judgment, and executive ability, the composition comprising bifidobacteria and water-soluble dietary fiber; use of bifidobacteria and water-soluble dietary fiber for the manufacture of a composition for improving at least one selected from the group consisting of attention, judgment, and executive ability; use of water-soluble dietary fiber for the manufacture of a composition for improving at least one selected from the group consisting of attention, judgment, and executive ability, the composition comprising bifidobacteria; use of bifidobacteria for the manufacture of a composition for improving at least one selected from the group consisting of attention, judgment, and executive ability, the composition comprising water-soluble dietary fiber; a method for improving at least one selected from the group consisting of attention, judgment, and executive ability, the method comprising administering (ingesting) an effective amount of bifidobacteria and water-soluble dietary fiber to a subject in need thereof; a combination of bifidobacteria and water-soluble dietary fiber for use in improving at least one selected from the group consisting of attention, judgment, and executive ability; water-soluble dietary fiber for use in combination with bifidobacteria in improving at least one selected from the group consisting of attention, judgment, and executive ability; and bifidobacteria for use in combination with water-soluble dietary fiber in improving at least one selected from the group consisting of attention, judgment, and executive ability.

Below, specific embodiments of the present invention will be described in more detail with reference to Examples. However, the present invention is not limited to these Examples.

### Examples

A randomized, double-blind, placebo-controlled, parallel-group comparative study was conducted to evaluate the potential of GCL2505 and inulin to improve cognitive function.

### Test Methods

### Subjects (Analysis Target Population)

This study was approved by the Ethics Committee of Kobuna Orthopedics Clinic on May 12, 2022 (approval date: March 12, 2022; approval number: MK-2205-01). Written informed consent was obtained from all participants based on the Declaration of Helsinki. The participants were Japanese men and women aged 50 to under 80 at the time of obtaining the consent, who satisfied the inclusion criteria, did not satisfy the exclusion criteria, and were deemed eligible to participate by the principal investigator. The inclusion criteria were as follows:
(1) individuals who score 24 or higher on the Mini Mental State Examination-Japanese (MMSE-J), 17 or higher on the Japanese version of the Montreal Cognitive Assessment (MoCA-J), and 5 or less on the Geriatric Depression Scale-short version-Japanese (GDS-S-J) in the screening test;
(2) individuals who have subjective symptoms of memory loss or who have been reported by close relatives or acquaintances to have objective symptoms of memory loss; and
(3) individuals who have been fully informed of the purpose and content of the study, have the capacity to consent, and volunteered of their own accord to participate in the study base on a thorough understanding of the purpose and content of the study, and have provided written informed consent to participate in the study.
The exclusion criteria were as follows:
(1) individuals who have a current or past history of mental disorders (including depressive symptoms), cerebrovascular diseases, and sleep disorders;
(2) individuals with serious liver, kidney, heart, respiratory, endocrine, or metabolic diseases;
(3) smokers;
(4) regular alcohol users (consuming 60 g or more pure alcohol equivalent daily) and individuals with an extremely irregular diet;
(5) individuals who are unable to follow restrictions on foods and supplements that affect the intestinal environment during the study period;
(6) individuals who took antibiotics within one month prior to the start of the study;
(7) individuals who have undergone digestive surgery (excluding appendicitis) ;
(8) individuals who have experienced allergies to the study food ingredients;
(9) individuals who are currently taking medications that may affect cognitive function (e.g., antipsychotics, anxiolytics, antidepressants, antiparkinsonians, antimaniac drug, antiepileptic drugs, and anticoagulant drugs);
(10) individuals with visual or hearing impairment that may interfere with cognitive function tests;
(11) individuals who routinely consume foods or supplements that may affect cognitive function;
(12) individuals with a current or past history of drug or alcohol dependence;
(13) individuals participating in studies involving the ingestion of other foods or the use of pharmaceuticals, or studies involving the application of cosmetics or pharmaceuticals, or participating in other studies while participation in this study; and
(14) any other individuals deemed ineligible by the principal investigator.

### Test Food

The test foods were a dairy drink containing inulin (Orafti GR; BENEO GmbH, Mannheim, Germany) and GCL2505 (test drink), and a placebo. The test drink was designed to contain 2.0 g of inulin per 100 g and 1 × 10¹⁰ colony-forming units (cfu) of GCL2505 per 100 g. The placebo was prepared using the same ingredients as the test product, with the addition of food-grade acetic acid and lactic acid to adjust the flavor and pH. The basic ingredients were skim milk powder, high fructose corn syrup, sucrose, yeast extract, acidifier, stabilizer, and flavoring. Table 1 shows the nutritional details of the test food and placebo.

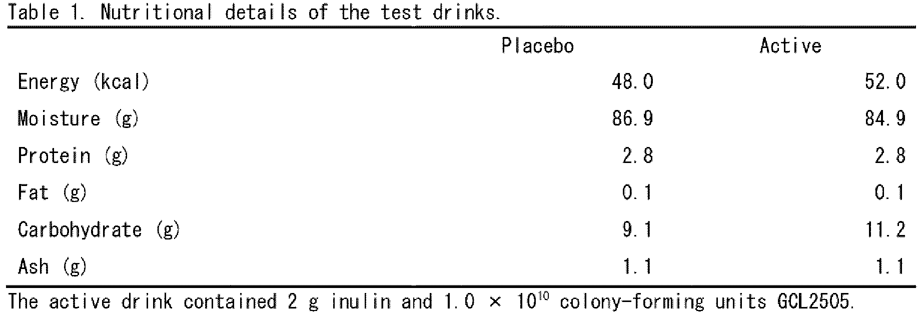

### Experimental Design

This test was conducted as a randomized, placebo-controlled, double-blind, parallel-group comparative study. Participants were randomized by stratified permuted block randomization using the age at the time of the screening test and sex, and the Cognitrax (short), MMSE-J, and MoCa-J scores as stratification factors, and assigned to two groups as subjects. The block sizes were set to 4. A controller (allocation manager) assigned the two groups to a test food intake group and a control food intake group. The subjects in the active group and the placebo group consumed 100 g of the dairy drink once daily for 12 weeks. Both the subjects and observers were blinded to the group allocation for the duration of the test. Double-blinding was accomplished by labeling the test food with only an identification number. The primary outcome was Cognitrax (long) at 12 weeks after the start of the test. The secondary outcomes were Cognitrax (long) at 8 weeks after the start of the test, fecal bifidobacteria count, and SF-36v2 (registered trademark).

### Cognitrax Test (PC-Based Cognitive Function Test)

The cognitive function of the participants was measured using Cognitrax, which was developed as a Japanese version of CNS Vital Signs (CNSVS) (NPL 6). The Cognitrax cognitive function tests were conducted in the following order: verbal memory test (VBM), visual memory test (VIM), finger tapping test (FTT), symbol digit coding test (SDC), Stroop test (ST), shift attention test (SAT), continuous performance test (CPT), perception of emotional test (POET), nonverbal reasoning test (NVRT), and fourpart continuous performance test (FPCPT). The test was conducted following previous procedures (NPL 7).

### Mental Health Status

Surveys using the World Health Organization (WHO)-Five Well-Being Index (WHO-5-J) (NPL 8) were conducted at weeks 0, 8, and 12 to confirm that the subjects had no abnormal mental health status during the study period.

### Biochemical Parameters

Blood pressure, pulse rate, and body weight were measured at weeks 0, 8, and 12. The concentrations of biochemical parameters were also measured at weeks 0 and 12. Blood samples were collected from each subject after 4 hours of no food or drink except water (fasting) prior to testing. The biochemical parameters included hematological tests (white blood cell count, red blood cell count, hemoglobin, hematocrit, MCV, MCH, MCHC, platelet count, and leukogram), biochemical tests (total protein, albumin, total bilirubin, AST, ALT, LD (IFCC), ALP (IFCC), γ-GT, urea nitrogen (UN), creatinine, uric acid, sodium, chloride, potassium, calcium, total cholesterol, LDL-cholesterol, HDL-cholesterol, triglycerides, phospholipids, glucose, HbAlc (NGSP), and insulin), and urinalysis (protein, sugar, bilirubin, urine ketone bodies, occult blood reaction, urobilinogen, pH, and specific gravity). Serum BDNF was also quantified. All of these tests were conducted at the LSI Medience Corporation (Tokyo, Japan).

### Inflammatory Protein Profile

For blood inflammation markers, proteins in frozen serum were measured using Olink (registered trademark) Target 96 Inflammation Panels (Olink Proteomics AB, Uppsala, Sweden) with proximity expansion technology, a high-throughput multiplex proteomic immunoassay, according to the manufacturer's instructions (see NPL 9). The panel contained 92 immune-related proteins, mostly cytokines and chemokines. In this assay, epitope-specific binding and hybridization of a set of paired oligonucleotide antibody probes were used, and amplification was then performed using quantitative PCR, followed by normalization on a log base 2 to Olink's own relative abundance units (normalized protein expression (NPX) values). Quality control was performed on samples (using spiked internal controls) and external controls for each sample plate. This test was performed by outsourcing it to Pharma Foods International Co., Ltd. (Tokyo, Japan).

### Fecal Sample Collection

Fecal samples were submitted at weeks 0 and 12. The fecal samples were collected at home between 7 days and 2 days before the scheduled visit date. The collected fecal samples were promptly transported to the testing company by refrigerated transport.

### Fecal DNA Extraction

The bacterial DNA was extracted from the fecal samples using an ISOSPIN Fecal DNA Kit (Nippon Gene Co., Ltd., Tokyo, Japan), following the report of Tourlousse et al. (NPL 10). Specifically, the sample (here, 0.2 g of the fecal sample), 700 µL of FE1 buffer, and 10 µL of RNase were added to the provided tubes containing beads. FastPrep-24 (MP Biomedicals, Irvine, CA) was used for bead-beating for 1 minute at a rate of 6 m/s to crush the cells. Bead-beating was performed 3 times, during which the samples were kept at room temperature for 5 minutes. Subsequently, 90 µL of FE2 buffer was added, and the samples were centrifuged at 12,000× g for 15 minutes. The supernatant (up to 500 µL) was collected and mixed with FB buffer and isopropanol, each at 0.4× the volume of the supernatant obtained. Finally, the samples were loaded onto spin columns and washed according to the manufacturer's instructions. The purified DNA was eluted with 50 µL of Tris-EDTA buffer (pH 8.0).

### Fecal Bifidobacteria

Following the report of Tanaka et al., real-time polymerase chain reaction (PCR) was performed using genusspecific primers capable of detecting *Bifidobacterium* spp., including GCL2505. The primer sequences were as follows: *Bifidobacterium* spp. sense primer, 50-GATTCTGGCTCAGGATGAACGC-30; *Bifidobacterium* spp. antisense primer, 50-CTGATAGGACGCGACCCCAT-30. Each PCR reaction mixture consisted of 20 pmol of each primer in the total volume of 10 µL, 5 µL of SYBR (registered trademark) premix Ex Taq (Takara Bio Inc., Shiga, Japan), and 1 µL of DNA solution (NPL 11). This test was performed by outsourcing it to the Kyoto Institute of Nutrition and Pathology (Kyoto, Japan).

### Statistical Analysis

All measurement values were expressed as mean and standard deviation (SD). All statistical analyses were performed using IBM (registered trademark) SPSS (registered trademark) Statistics 27 (IBM Corp., Armonk, NY, USA). A p-value < 0.05 was used as the threshold for determining significance. As basic statistics, means and SDs were expressed to one digit below the significant digits, percentages (%) were expressed to one decimal place, and digits were adjusted by rounding. Missing data were treated as missing values, and no surrogate values were used. Cognitrax (long) statistical analyses were performed with paired t-tests in order to compare the test results at the start of intake (week 0) with those at 8 and 12 weeks after the start of intake. For the other items, statistical analysis was performed by Dunnett's test (two-tailed) to compare the test results at the start of intake (0 week) with those at 8 and 12 weeks after the start of intake, and a Wilcoxon signed-rank test was used for qualitative evaluation items. Comparisons between the active group and the placebo group during each test were statistically analyzed with an unpaired t-test (two-tailed), and the Wilcoxon rank-sum test was used for qualitative evaluation items.

### Results

### Subjects (Analysis Target Population)

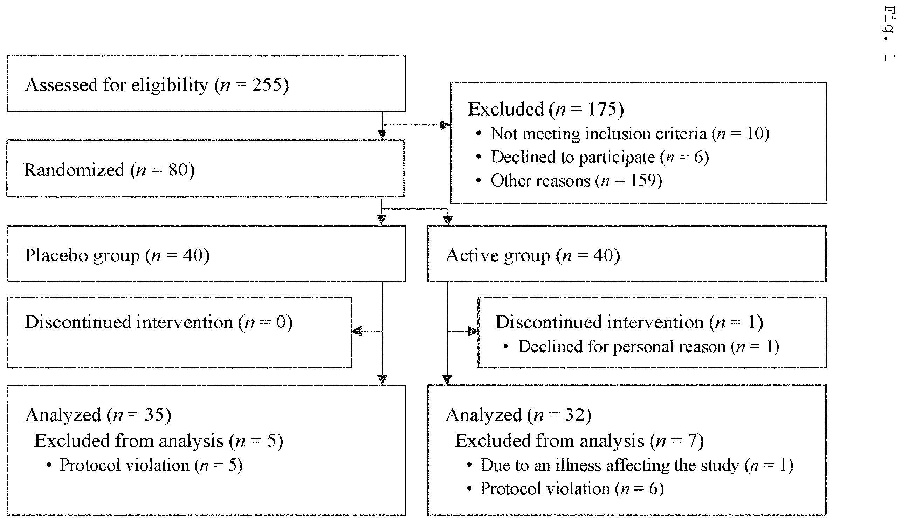

An overview of the test period is shown in the flowchart in Fig. 1. In this study, 255 participants were screened. As a result of the screening, 80 participants were eligible: 40 were assigned to the active group and 40 were assigned to the placebo group. A significant difference in alkaline phosphatase levels was observed between the active group and the placebo group at the beginning of the test; however, it was deemed acceptable because the values were within the reference range. For the other items, there were no differences in the baseline characteristics of the subjects' data (Table 2).

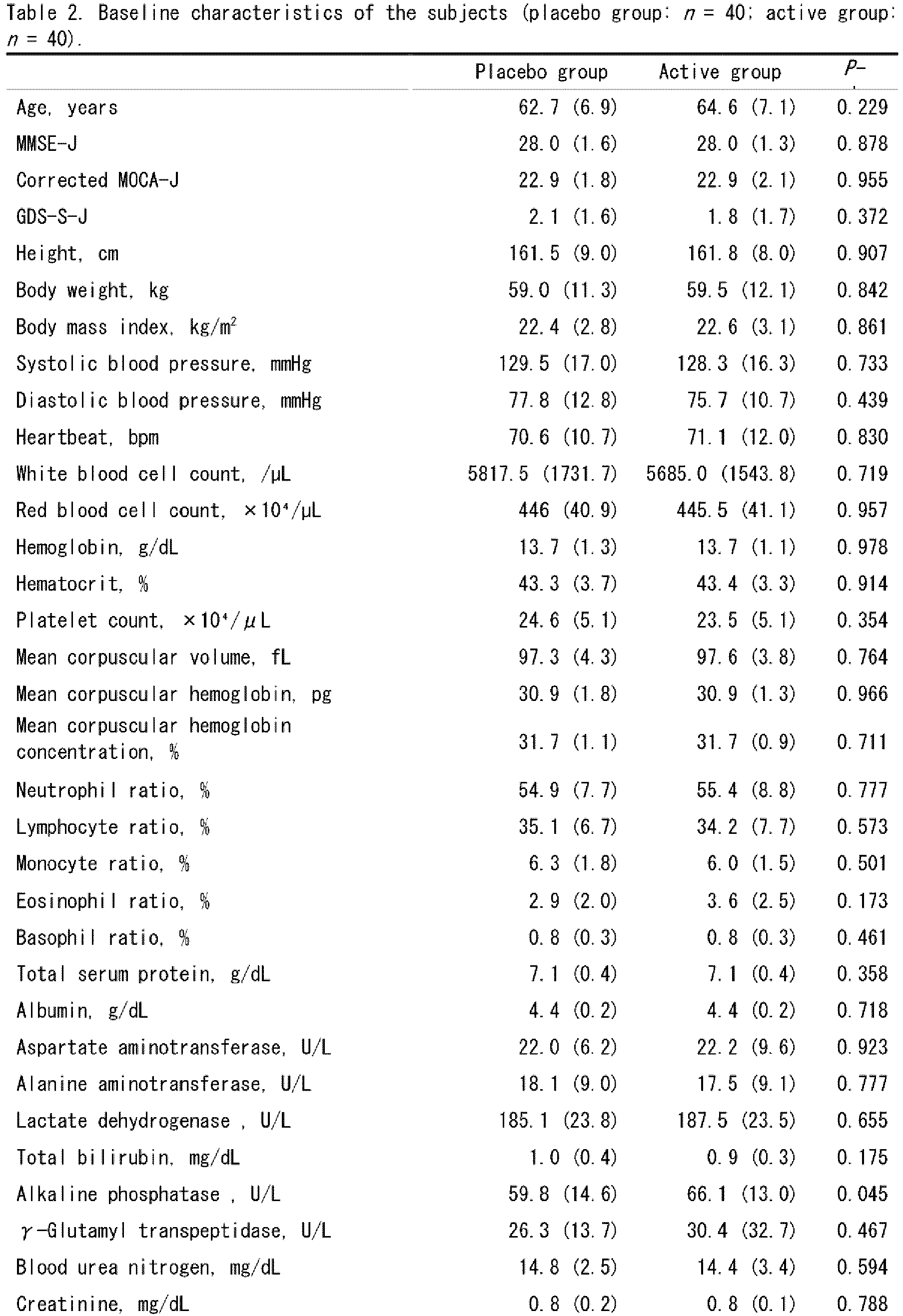

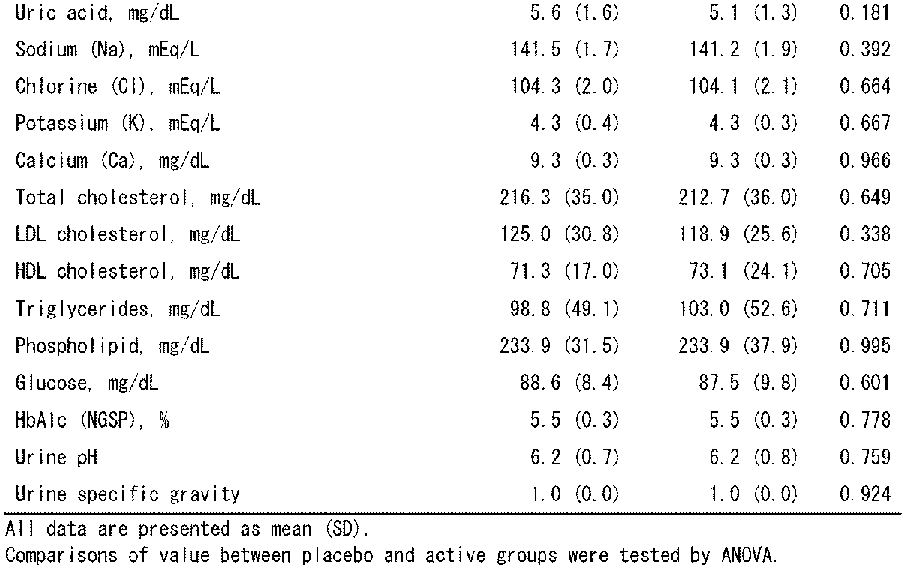

By the end of the test, one participant from the active group withdrew for personal reasons. After the completion of the entire test, one participant from the placebo group was determined to be discontinued from a compliance perspective. Also, one participant from the active group was dropped due to a confirmed illness unrelated to the test that might have affected the results. In addition, nine participants were also excluded because they were found to have consumed drugs or foods during the test period that might have affected the test results (n = 5 from the active group and n = 4 from the placebo group). Further, the case of one participant from the active group was rejected due to partially missing primary-endpoint data. Thus, a total of 67 subjects (32 in the active group and 35 in the placebo group) were included in the analysis target population. Moreover, four participants with reduced WHO-5-J scores were also excluded for Cognitrax analysis (n = 1 from the active group and n = 3 from the placebo group) because they had a score of ≤50, which is used as the cut-off for assigning a screening diagnosis of depression in the global version of WHO-5. Reduced WHO-5-J scores indicate the possibility of elderly depression caused by an indoor lifestyle due to the COVID-19 pandemic, and thus Cognitrax tests may not have been performed properly in these subjects.

### Cognitrax Test

The score change in the neurocognitive index domain from week 0 to week 12 in the active group (5.5 ± 7.1) was greater than that in the placebo group (2.3 ± 4.0), and there was a statistically significant difference between them (p = 0.027 by the unpaired t-test). Furthermore, the score change in the complex attention domain from week 0 to week 12 in the active group (8.3 ± 11.8) was significantly higher than that in the placebo group (3.2 ± 6.9) (p = 0.041 by the unpaired t-test), the score change in the cognitive flexibility domain in the active group (9.8 ± 11.5) was significantly higher than that in the placebo group (4.8 ± 6.7) (p = 0.038 by the unpaired t-test), and the score change in the executive function domain in the active group (9.5 ± 11.8) was significantly higher than that in the placebo group (4.5 ± 6.9) (p = 0.044 by the unpaired t-test) (Table 3).

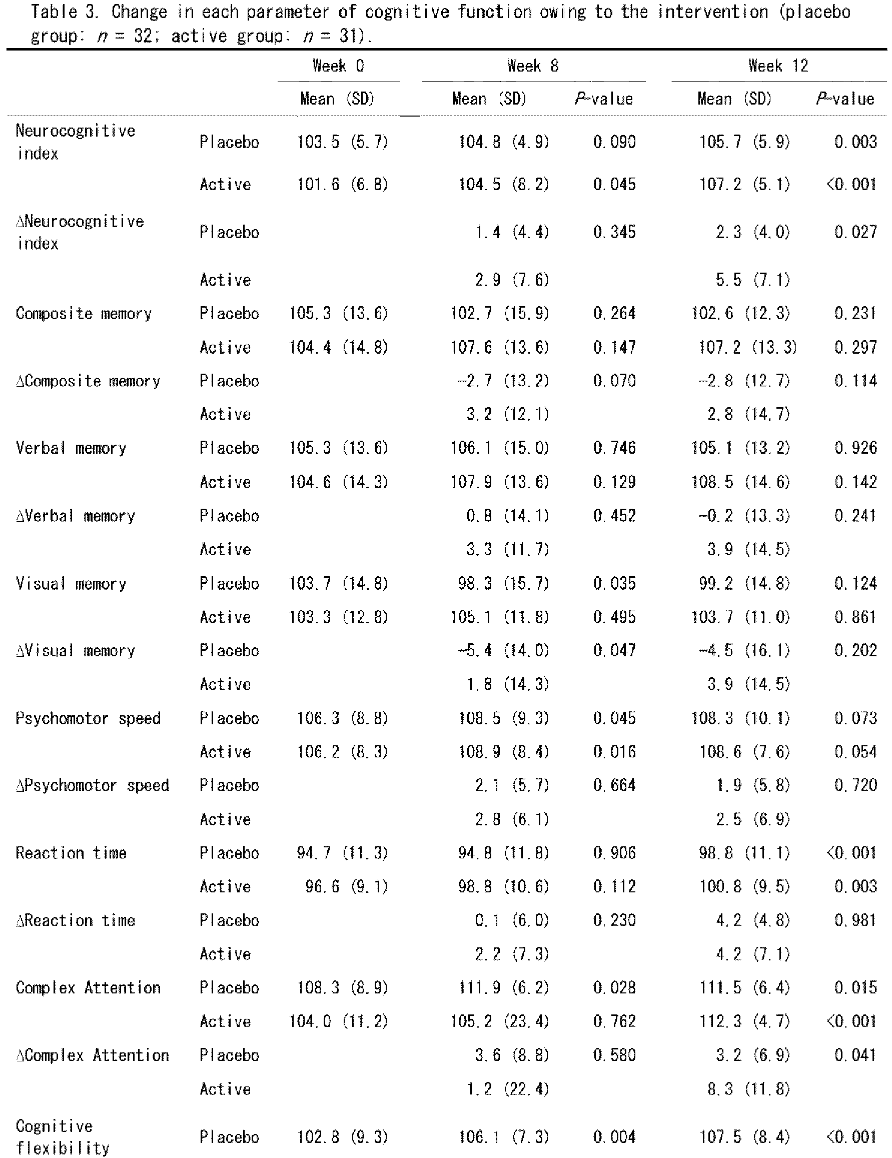

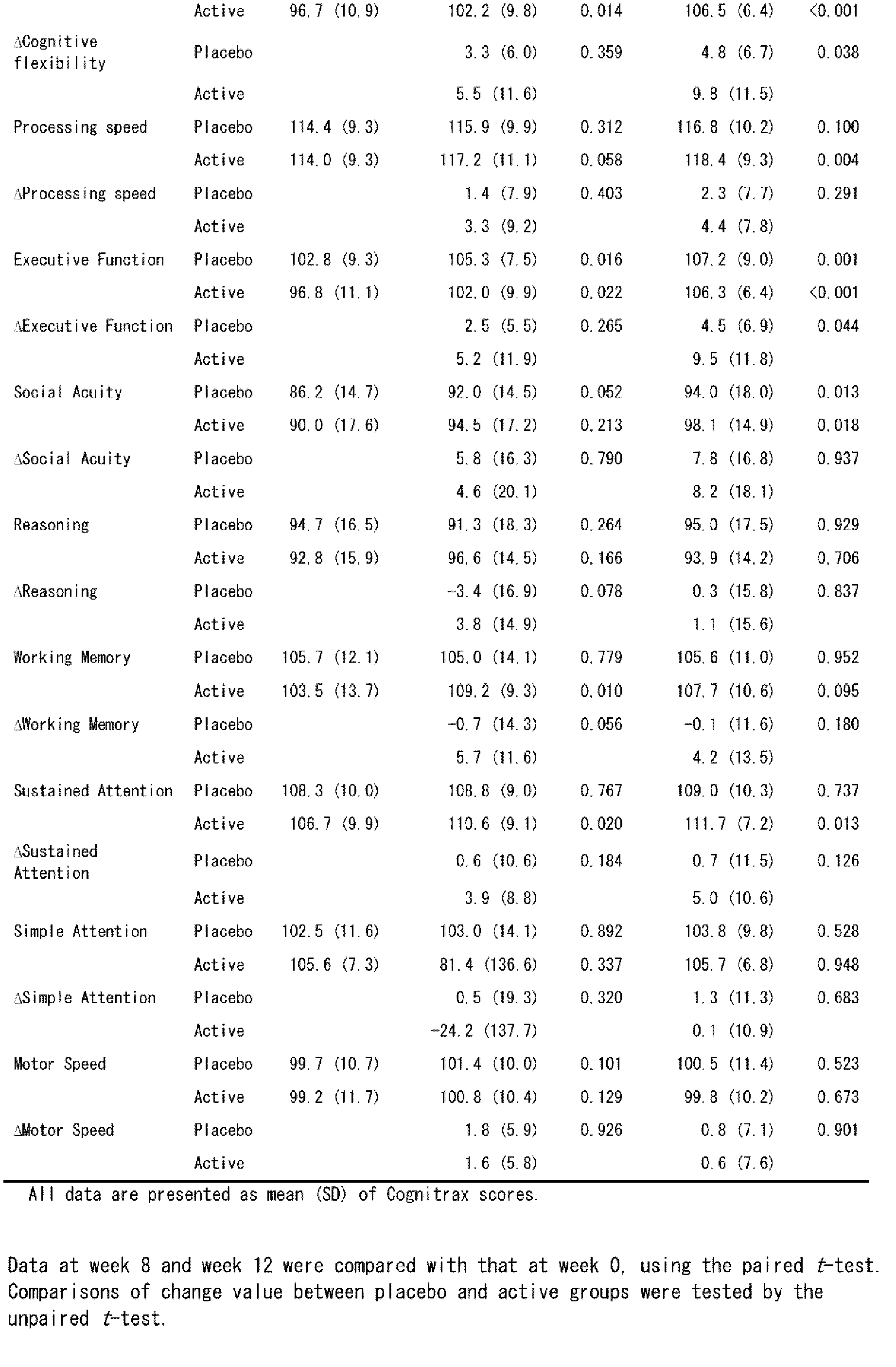

### Number of Fecal Bifidobacteria

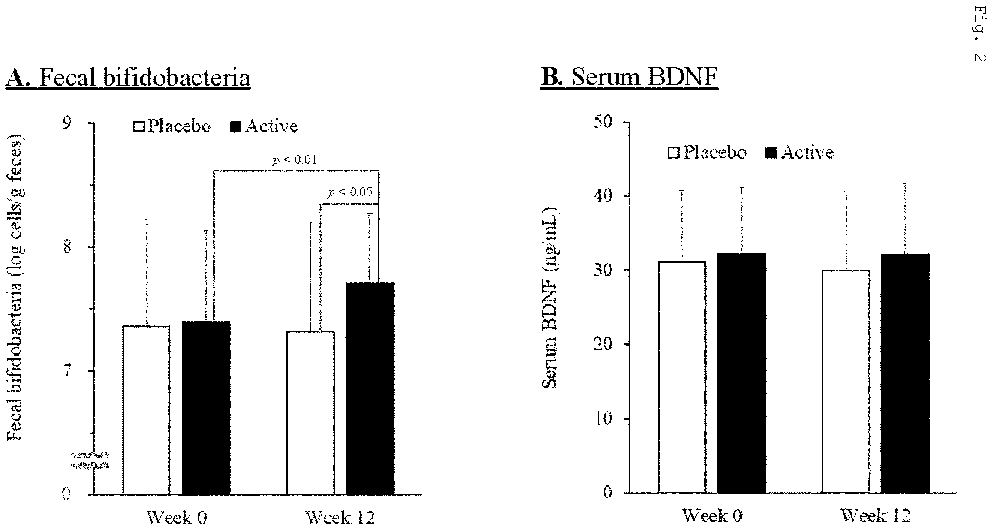

The number of bifidobacteria in the feces was quantified (Fig. 2). The number of bifidobacteria in the active group at week 12 (7.71 ± 0.56 log cells/g feces) was significantly increased compared to week 0 (7.39 ± 0.74 log cells/g feces) (p = 0.005 by Dunnett's multiple comparison test), while no change was observed in the placebo group. In addition, the total number of bifidobacteria was significantly increased in the active group compared to the placebo group (7.31 ± 0.90 log cells/g feces) at week 12 (p = 0.031 by the unpaired t-test).

### Blood Inflammation Markers

The expression levels of a total of 92 inflammatory markers were examined at weeks 0 and 12 using Olink (registered trademark) Target 96 Inflammation Panels. Seventy-five inflammatory markers that were determined to be quantifiable were analyzed. The results showed that there were statistically significant differences between the active and the placebo groups in score change from week 0 to week 12 for leukemia inhibitory factor receptor (LIF-R), sulfotransferase 1A1 (ST1A1), C-C motif chemokine 23 (CCL23), and tumor necrosis factor (ligand) superfamily member 12 (TWEAK). There were no statistically significant differences between the active and placebo groups in score change from week 0 to week 12 for adenosine deaminase (ADA), osteoprotegerin (OPG), eotaxin (CCL11), glial cell linederived neurotrophic factor (GDNF), fractalkine (CX3CL1), Interleukin-8 (IL-8), C-C motif chemokine 28 (CCL28), Interleukin-18 (IL-18), Interleukin-10 (IL-10), C-C motif chemokine 19 (CCL19), and T-cell surface glycoprotein CD5 (CD5); however, the trends were considered significant because the *p-*value was <0.1 (Table 4).

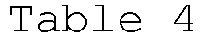

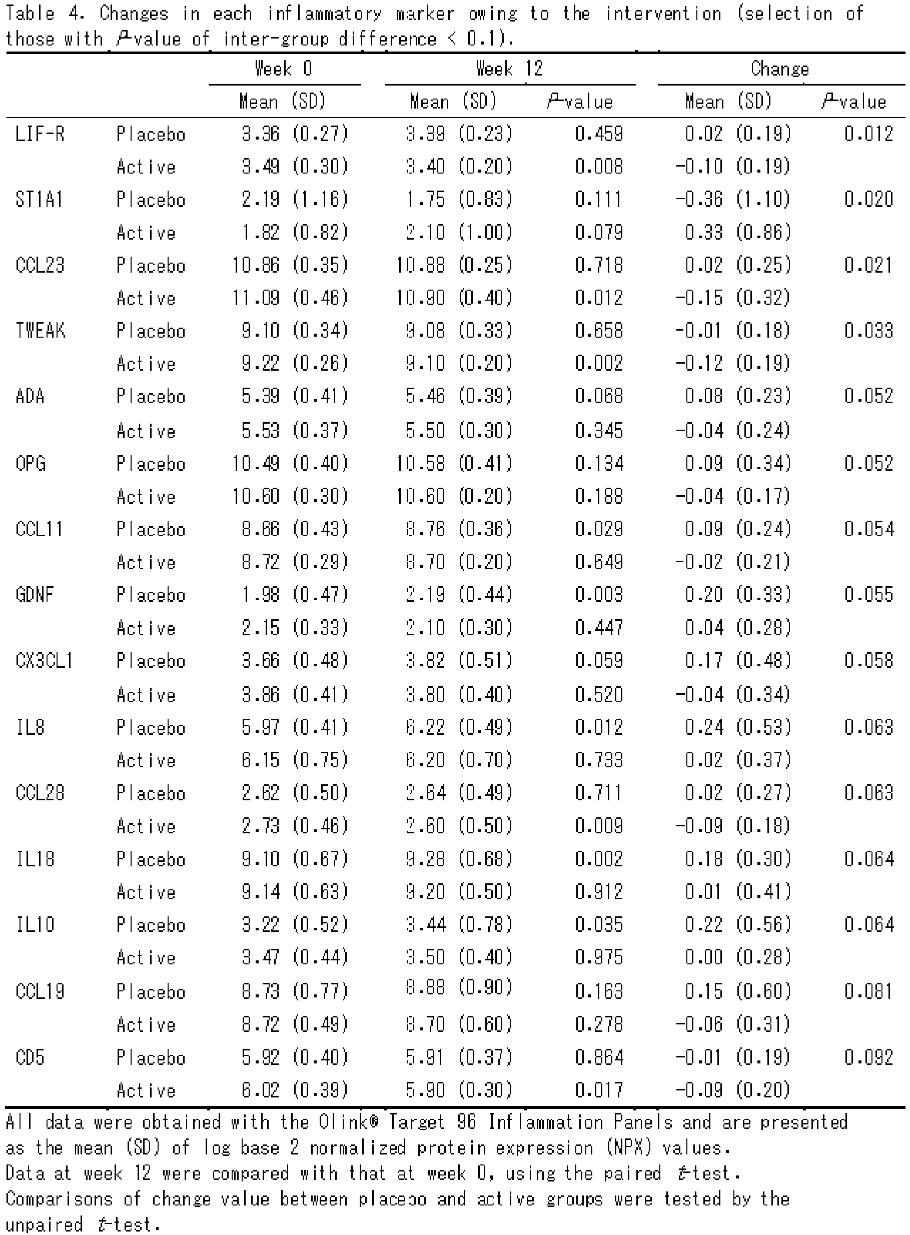

These results revealed that the intake of a synbiotic drink containing GCL2505 and inulin improves complex attention, cognitive flexibility, and executive function, as well as the neurocognitive index domain score. These cognitive functions may contribute to an improvement in the quality of life, and the results obtained this time are considered to be clinically significant.

## Claims

1. A composition for improving at least one selected from the group consisting of complex attention, cognitive flexibility, and executive function, the composition comprising bifidobacteria and water-soluble dietary fiber.

2. The composition according to claim 1, wherein the water-soluble dietary fiber comprises inulin.

3. The composition according to claim 1 or 2, for improving a neurocognitive index.

4. The composition according to claim 1 or 2, wherein the bifidobacteria have an ability to proliferate in the gut.

5. The composition according to claim 1 or 2, wherein the bifidobacteria have an anti-metabolic syndrome effect.

6. The composition according to claim 1 or 2, which is a food product.

7. The composition according to claim 1 or 2, which is a food product for suppressing cognitive decline, maintaining cognitive function, or improving cognitive function.

8. Use of bifidobacteria and water-soluble dietary fiber for the manufacture of a composition for improving at least one selected from the group consisting of complex attention, cognitive flexibility, and executive function.

9. The use according to claim 8, wherein the water-soluble dietary fiber comprises inulin.

10. The use according to claim 8 or 9, wherein the composition is for improving a neurocognitive index.

11. The use according to claim 8 or 9, wherein the bifidobacteria have an ability to proliferate in the gut.

12. The use according to claim 8 or 9, wherein the bifidobacteria have an anti-metabolic syndrome effect.

13. The use according to claim 8 or 9, wherein the composition is a food product.

14. The use according to claim 8 or 9, wherein the composition is a food product for suppressing cognitive decline, maintaining cognitive function, or improving cognitive function.
